# EUROPÄISCHE PATENTSCHRIFT

(11) **EP 2 256 335 B1**
(45) Veröffentlichungstag und Bekanntmachung des Hinweises auf die Patenterteilung: **02.11.2011**
(21) Anmeldenummer: 10158000.9
(22) Anmeldetag: 26.03.2010
(51) Int. Cl.: F02M 61/16, F02M 63/00, F02M 47/02, F16K 31/06

(54) **Verfahren zur Einstellung des Ventilhubes**
Method for adjusting valve lift
Procédé de réglage de la course de soupape

(30) Priorität: 19.05.2009 DE 102009003208
(43) Veröffentlichungstag der Anmeldung: 01.12.2010
(73) Patentinhaber: Robert Bosch GmbH, 70442 Stuttgart (DE)
(72) Erfinder: Howey, Friedrich, 71254 Ditzingen (DE)

(56) Entgegenhaltungen:
- EP-A1- 1 707 797
- EP-A1- 1 744 054
- EP-A1- 1 845 256
- EP-A2- 0 890 730
- WO-A1-03/083286

## Beschreibung

### Stand der Technik

Aus DE 101 33 218 C2 ist ein Verfahren sowie eine Vorrichtung zur Einstellung des Magnethubes in Kraftstoffinjektoren bekannt. Gemäß DE 101 33 218 C2 erfolgt die Montage eines Magnetventils, bei welchem ein Elektromagnet von einer Magnethülse umschlossen in eine Öffnung eines Injektorkörpers fixiert wird, indem die Magnethülse mittels einer Magnetspannmutter am Injektorkörper aufgenommen und zwischen Stirnfläche der Magnethülse und dem Injektorkörper eine Einstellscheibe angeordnet wird. Zunächst erfolgt eine Voreinstellung des Ankerhubes eines Ankers mittels einer Einstellscheibe, ein vorwählbares Anzugsdrehmoment wird auf die Magnetspannmutter beim Aufziehen auf die Injektorkappe aufgebracht und im Schraubverbund aus Injektorkappe und Magnetspannmutter sind elastische Elemente ausgebildet. Während des Anziehens der Magnetspannmutter wird der Hubweg des Ankers aufgenommen.

In gegenwärtig verwendeten Montageverfahren wird die Magnetspannmutter mit konstanter Rotationsgeschwindigkeit angeschraubt, während gleichzeitig der Hub beziehungsweise die Schließdauer des Magnetventils gemessen wird. Als Schließdauer wird die Zeit bezeichnet, die vom Abschalten des Spulenstromes bis zum Einschlagen des Ventilelementes in den Dichtsitz vergeht. Die Messung der Schließdauer ersetzt zum Teil die Messung des Ventilhubes, da der Ventilhub bei bestimmten Injektortypen nicht mehr in montiertem Zustand gemessen werden kann. Dabei ist es nötig, dass die Veränderung des Hubes beziehungsweise der Schließdauer des Magnetventils über die Zeit bei konstanter Rotationsgeschwindigkeit der Magnetspannmutter nahezu konstant ist, damit die Einrichtung zum Verschrauben rechtzeitig die Erreichung des Zielhubs erkennt und den Schraubvorgang beendet. Diese Bedingung wird weitgehend erfüllt, wenn es sich bei der Verformung um eine rein elastische Verformung handelt. Zusätzlich existiert jedoch die Bedingung, dass das aufgebrachte Drehmoment zwischen einem Minimalwert und einem Maximalwert liegt. Der Minimalwert ist dadurch definiert, dass ein selbstständiges Lösen bei zu geringen Losbrechmomenten verhindert werden muss. Der Maximalwert ist andererseits dadurch definiert, dass die Bauteile nur bis einem bestimmten Drehmoment ihre Festigkeit gegen Versagen sicherstellen. Durch diese Einschränkung gibt es nur einen bestimmten Bereich, in dem der Ventilhub feineingestellt werden kann. Dieser Bereich kann zusätzlich eingeschränkt werden, wenn die plastische Verformung der Magnethülse bei geringeren Drehmomenten als Mₘₐₓ auftritt und damit die konstante Veränderung des Hubs über die Zeit nicht mehr gegeben ist.

Der nutzbare Verstellweg des Ventilhubs, der durch obige Bedingungen beschrieben ist, ist nicht genügend groß, um einen Fehler bei der Auswahl der Einstellscheibe und Streuungen in der Steifigkeit der Magnethülse und der Reibmomente zwischen Magnetspannmutter und Injektorkörper beziehungsweise Magnethülse ausgleichen zu können. Das wiederum führt dazu, dass einige Kraftstoffinjektoren nicht auf den Zielhub eingestellt werden können und demontiert werden müssen. Insbesondere liegt der Bereich der beginnenden plastischen Verformung bei derzeitigen Injektoren bei Drehmomenten unterhalb der oberen Drehmomentgrenze, die durch die Festigkeit der anderen Bauteile definiert ist. Eine Auslegung der Magnethülse hin zu geringeren Steifigkeiten und damit zu einem größeren Verstellbereich innerhalb der Drehmomentgrenzen Mₘᵢₙ und Mₘₐₓ führt wiederum zu noch früher einsetzender plastischer Verformung.

### Offenbarung der Erfindung

Der vorliegenden Erfindung liegt der Gedanke zugrunde, den Verstellbereich nicht nur im Bereich der rein elastischen Verformung zu nutzen, sondern den Verstellbereich durch eine gezielte plastische Verformung beim Verschrauben hin zu kleineren Ventilhüben zu verschieben beziehungsweise leicht zu vergrößern. Dadurch kann bei unveränderter Auslegung der Magnethülse ein größerer Verstellweg genutzt werden und die Ausbringung bezüglich Zielwert der Kraftstoffinjektoren hinsichtlich von deren Zielhub oder Schließdauer gesteigert werden.

Ein Verschrauben der Magnethülse beziehungsweise der Magnetbaugruppe beginnt nicht wie allgemein üblich, mit einem Setzlauf, d.h. ein Verschrauben der Magnetspannmutter mit der maximal auftretenden Drehmomenten erfolgt ohne gleichzeitige Ventilhubmessungen. Dies erfolgt deswegen, um eventuelle plastische Verformung an Auflageflächen vorwegzunehmen.

Beim ersten Anziehen der Magnetspannmutter wird bereits mit konstanter, relativ langsamer Rotationsgeschwindigkeit und gleichzeitiger, sich wiederholender Messung des Ventilhubes beziehungsweise der Schließdauer verschraubt. Mit hoher Wahrscheinlichkeit wird es bei hohen Drehmomenten zu plastischer Verformung kommen. Bei Erreichung eines Zielhubes M_{d1} wird um ein Differenz-Drehmoment ΔM_{d} weiter gedreht, welches umgerechnet in Axialkraft, bei angenommener maximaler Reibung der zusätzlichen Betriebskraft durch Temperatureinfluss entspricht. Dabei ist es jedoch von untergeordneter Relevanz, ob vor oder nach dem Erreichen des Zielhubes oder gar nicht eine Erreichung des plastischen Bereiches der Bauteile erfolgt. Das Weiterdrehen stellt sicher, dass im Betrieb keine höheren Axialkräfte als während des Schraubungsvorganges auftreten. Die Magnethülse plastifiziert bei nochmaligem Erreichen dieser Axialkräfte nicht noch einmal, da es sich nicht um ein Kriechen also eine Verformung unter Einwirken einer konstanten Last handelt.

Die Magnetspannmutter wird in Losdrehrichtung verdreht, bis das Drehmoment einen definierten unteren Wert, kleiner einer als Mₘᵢₙ erreicht hat.

Die Magnetspannmutter wird ein zweites Mal mit konstanter Rotationsgeschwindigkeit bei gleichzeitigem Messen des Ventilhubes angezogen, bis ein Zielhub bei M_{d2} erreicht ist. Falls die Magnethülse beim ersten Anziehen in den Bereich der plastischen Verformung geraten ist, wird der Wert für M_{d2} kleiner als der Wert für M_{d1} sein. Falls die Magnethülse nicht plastifiziert, liegen beide Kurven übereinander. Da beim zweiten Verschrauben eine kleinere Axialkraft auftritt, als beim ersten Verschraubungsvorgang, kommt es zu keiner weiteren plastischen Verformung und die Kurve des Ventilhubes aufgetragen auf das Drehmoment verläuft mit konstanter Steigung.

Bei einem stabilen Prozess in der Serienfertigung wird in Vergleich zu bisherigen Prozessen eine größere Einstellscheibe gewählt werden, um sicherzustellen, dass der Ventilhub bei minimalem Drehmoment Mₘᵢₙ nicht zu klein gewählt ist. Im Bereich der oberen Drehmomente wird durch gezielte Plastifizierung der Magnethülse und damit verbundene Verkürzung der Länge zwischen Auflage des Magnetkernes und Einstellscheibe das Demontieren und Einlegen einer dünneren Einstellscheibe ersetzt. Somit kann ein größerer Verstellbereich ausgenutzt werden, insbesondere dadurch, dass die negative Steigung Ventilhub/Drehmoment im plastischen Bereich betragsmäßig größer ausfällt und damit bei kleinen Änderungen des Drehmomentes große Änderungen im Ventilhub durchfahren werden können.

Das vorstehend erwähnte Weglassen des bisher erforderlichen Setzlaufes hat zum Ziel, die gezielt während des Schraubvorganges erfolgte Plastifizierung und Verkürzung der Magnethülse nicht bereits vor dem eigentlichen Verschrauben auf Zielhub stattfinden zu lassen. Eventuell kann auf das Auswählen einer bestimmten Einstellscheibe verzichtet werden und stattdessen eine Einstellscheibe mit Standarddicke verbaut werden. Der Verstellbereich wird dann so genutzt, dass bei jedem Injektor der gewünschte Ventilhub eingestellt werden kann.

### Kurze Beschreibung der Zeichnung

Anhand der Zeichnung wird die Erfindung nachstehend eingehender beschrieben.

Es zeigt:
Figur 1 einen Kraftstoffinjektor gemäß des Standes der Technik,
Figur 2 einen Schnitt durch einen Kraftstoffinjektor mit einer Begrenzung des Ventilhubes durch die Polfläche des Magnetkernes,
Figur 3 eine Ausführungsvariante einer elastisch ausgebildeten Hülse,
Figur 4 ein Schaubild einer rein elastisch verlaufenden Verformung der Magnethülse, wobei der Ventilhub über das Drehmoment der Spannmutter aufgetragen ist,
Figur 5 den Verlauf einer elastisch-plastischen Verformung der Magnethülse ebenfalls mit über das Drehmoment der Spannmutter aufgetragenen Ventilhub,
Figur 6 den Verlauf einer beginnenden plastischen Verformung - ähnlich wie in Figur 5 dargestellt -, wobei der Ventilhub über das Drehmoment der Spannmutter aufgetragen ist, und
Figur 7 eine sich bei Identität von berechneter und tatsächlicher plastischer Verformung der Magnethülse einstellende Ziel-Schließdauer des Magnetventils.

### Ausführungsvarianten

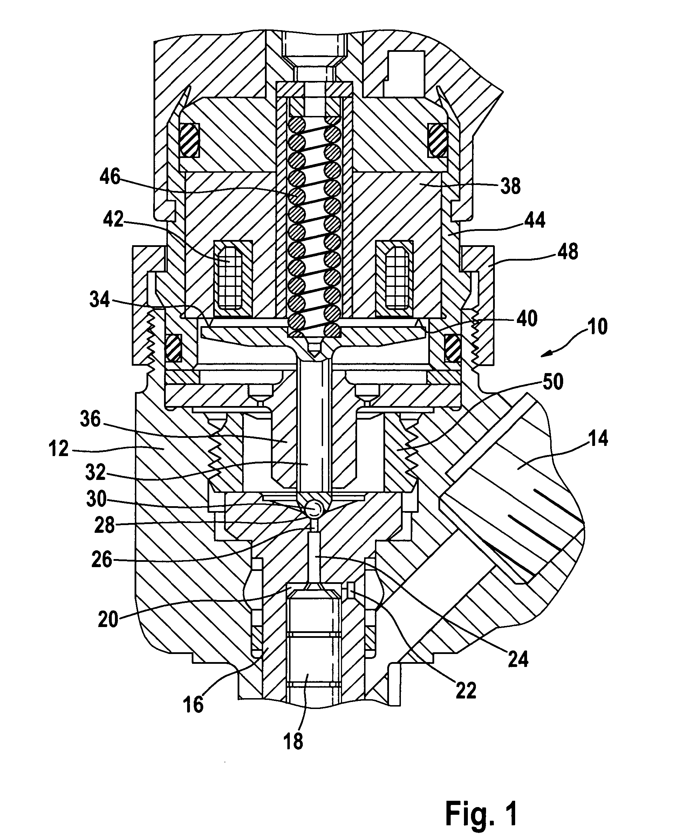

Der Darstellung gemäß Figur 1 ist ein Schnitt durch einen aus dem Stande der Technik bekannten Kraftstoffinjektoren zu entnehmen.

Der in Figur 1 dargestellte Kraftstoffinjektor 10 umfasst einen Injektor 12, in den seitlich ein Hochdruckzulauf 14 mündet. Über den Hochdruckzulauf 14 wird unter Systemdruck stehender Kraftstoff von einem Hochdruckspeicherraum eines Kraftstoffspeichereinspritzsystems zum Kraftstoffinjektor 10 geführt. Im Injektorkörper 12 des Kraftstoffinjektors 10 ist ein Ventilstück 16 eingesetzt, in welchem ein Einspritzventilglied 18 oder eine Druckstange, die ein weiter unter liegendes Einspritzventilglied betätigt, aufnimmt. Im Ventilstück 16 ist ein Steuerraum 20 ausgebildet, der über eine Zulaufdrossel 22 von dem aus dem Zulauf 14 austretenden, unter Systemdruck stehenden Kraftstoff beaufschlagt wird. Der Steuerraum 20 im Ventilstück 16 ist über einen Ablaufkanal 24 druckentlastbar. Im Ablaufkanal 24 befindet sich unterhalb der Mündungsstelle des Ablaufkanals, d.h. eines Ventilsitzes 28 eine Ablaufdrossel 26. Der Ventilsitz 28 des Ablaufkanals 24 ist durch ein Schließelement 30 verschlossen, welches in der Darstellung gemäß Figur 1 kugelförmig ausgebildet ist.

Der Kraftstoffinjektor 10 wird mittels eines Magnetventils betätigt. Eine Magnetbaugruppe des Magnetventils umfasst einen Anker 32, der in einer Ankerungführung 36 geführt ist. Die Ankerführung 36 ist ihrerseits von einer Ventilspannschraube 50 umflossen, mit der das Ventilstück 16 im Injektorkörper 12 des Kraftstoffinjektors 10 montiert ist.

Der Anker 32 weist eine Planfläche 34 auf, welcher einer Planseite 40 eines Magnetkerns 38 zuweist. Der Magnetkern 38 umfasst eine Magnetspule 42. Die Magnetbaugruppe, den Magnetkern 38, die Magnetspule 42 sowie den Anker 32 umfassend wird von einer Magnethülse 44 umschlossen, die mittels einer Magnet-Spannmutter 48 am Injektorkörper 12 verschraubt wird.

Aus der Darstellung gemäß Figur 1 geht hervor, dass der Anker durch eine Ventilfeder 46 beaufschlagt ist und in den Ventilsitz 28 gedrückt wird. Erst bei Bestromung der im Magnetkern 38 aufgenommenen Magnetspule 42 erfolgt durch Anziehen der Planfläche 34 des Ankers 32 ein Öffnen des Ventilsitzes 28.

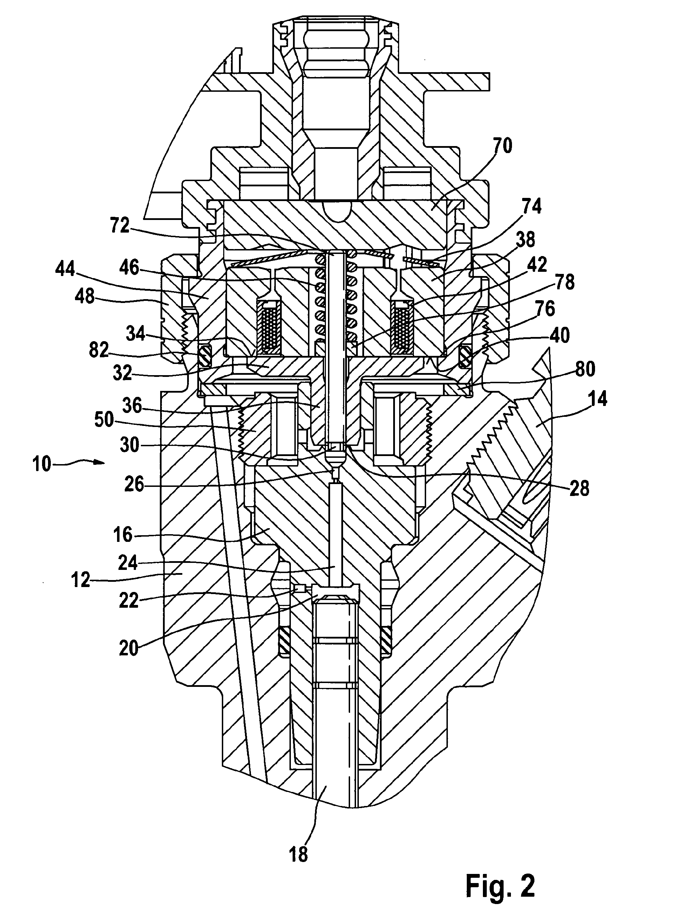

Figur 2 zeigt einen Längsschnitt durch einen Kraftstoffinjektor, bei dem eine angezogene Magnethülse im Rahmen einer Magnetbaugruppe eines Magnetventils eingesetzt wird.

Aus der Darstellung gemäß Figur 2 geht hervor, dass analog zu dem aus dem Stand der Technik bekannten Kraftstoffinjektor 10 gemäß Figur 1 der dort dargestellte Kraftstoffinjektor 10 einen Magnetkern 38 umfasst, der durch eine Tellerfeder 74, die hier als Anstellfeder dient, gegen einen umlaufenden Absatz 76 der Magnethülse 44 angestellt wird. Die Tellerfeder 74 stützt sich an einem Druckstück 70 ab, an welchem sich sowohl die Ventilfeder 46 als auch ein Druckstift 72 abstützen. Die Ventilfeder 46 stützt sich auf einer Federkrafteinstellscheibe 78 ab, der Anker 32 ist am Druckstift 72 sowie in einer Ankerführung 36, die sich von der Oberseite des Ventilstücks 16 aus erstreckt, geführt. In der Darstellung gemäß Figur 2 verschließt die Spitze des Ankers 32 den Ventilsitz 28 an der Oberseite des Ablaufkanals 24, in dem Ablaufdrossel 26 aufgenommen ist. Am unteren Ende des Ablaufkanals 24 befindet sich der Steuerraum 20, der durch die Zulaufdrossel 22 analog zur Darstellung gemäß Figur 1, mit unter Systemdruck stehenden Kraftstoff beaufschlagt wird.

An der Außenseite der Magnethülse 44 befindet sich ein elastisch verformbarer Dichtring 82. Neben der Ventilspannschraube 50 befindet sich eine Einstellscheibe 80, auf der die durch die Magnetspannmutter 48 am Injektorkörper 12 verschraubbare Magnethülse 44 aufsteht.

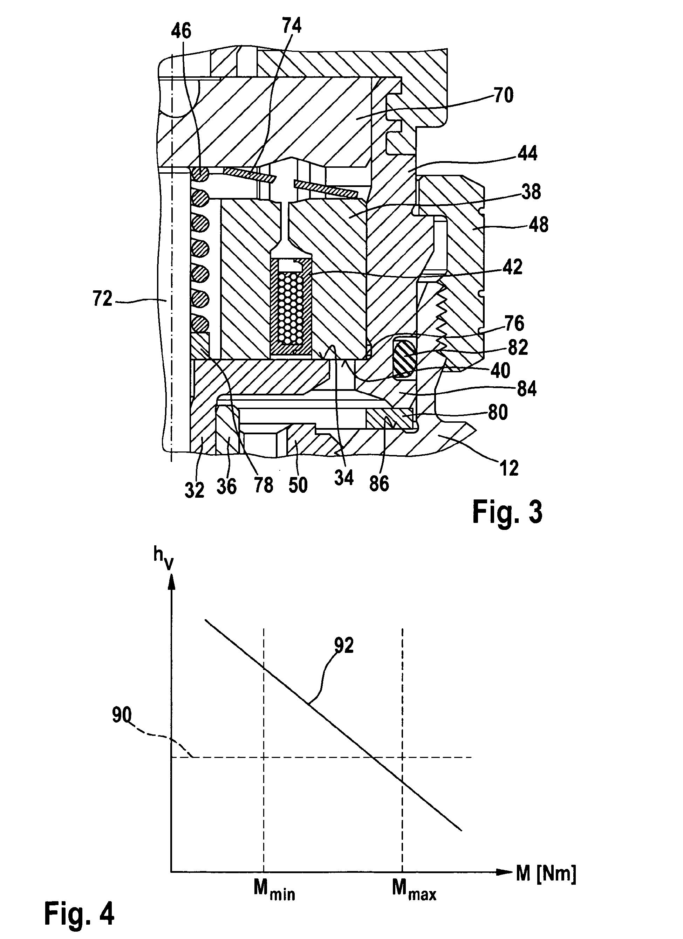

Der Darstellung gemäß Figur 3 ist ein vergrößerter Ausschnitt der Magnetgruppe des Magnetventils zur Betätigung des Kraftstoffinjektors gemäß Figur 2 zu entnehmen.

Figur 3 zeigt in vergrößerter Darstellung den sich am Druckstück 70 abstützenden Druckstift 72, der seinerseits als Führung des Ankers 32 dient. Die Ankerführung 36 ist in der vergrößerten Darstellung gemäß Figur 3 nur teilweise dargestellt. Die Ventilspannschraube 50, mit der das Ventilstück 16 samt Ankerführung 36 im Injektorkörper 12 befestigt sind, ist in der vergrößerten Darstellung gemäß Figur 3 nur teilweise dargestellt. Aus der Figur 3 geht hervor, dass der Injektorkörper 12 des Kraftstoffinjektors 10 eine planverlaufende Auflagefläche 86 umfasst. Auf dieser ist eine Einstellscheibe 80 zur Einstellung des Ventilhubes h_{V} aufgenommen. Auf der Oberseite der Einstellscheibe 80 stützt sich die die Magnetbaugruppe umschließende Magnethülse 44 mit einem umlaufend ausgebildeten Absatz 84 ab. Dieser umlaufende Absatz 84 stellt einen elastischen Kragen dar, an welchem sich die elastische oder kombiniert elastisch/plastische oder rein plastische Verformung einstellt. Die Vorspannung zwischen der Einstellscheibe 80 und damit der Ventilhub zwischen dem Anker 32 in Bezug auf die Planseite 40 des Magnetkernes 38 wird einerseits durch die Dicke der Einstellscheibe 80 und andererseits durch das Maß einer elastischen oder plastischausbettbaren Verformung des umlaufenden Absatzes 84 an der unteren der Einstellscheibe 80 zuweisenden Stirnseite der Magnethülse 44 definiert. Die Vorspannung zwischen der Magnethülse 44 und der Einstellscheibe 80 im Injektorkörper 12 wird durch das Anzugsdrehmoment eingestellt, welches auf die Magnetspannmutter 48 aufgebracht wird. Aus der Darstellung gemäß Figur 3 geht zudem hervor, dass die Magnethülse 44 über den elastisch verformbaren Dichtring 82 gegen den Injektorkörper 12 abgedichtet ist. Im Magnetkern 38 der Magnetbaugruppe ist die Magnetspule 42 aufgenommen; der Magnetkern 38 ist ferner mit einer Durchgangsöffnung versehen, durch die sich die Ventilfeder 46 erstreckt. Der Magnetkern 38 wird mittels einer als Tellerfeder ausgebildeten Anstellfeder 74 gegen den stufenförmigen Absatz 76 an der Unterseite der Magnethülse 44 gedrückt.

Der sich am Druckstück 70 abstützende Druckstift 72 dient gleichzeitig als Führung für die Ventilfeder 46, die die Federkrafteinstellscheibe 78 auf der Oberseite des Ankers 32 beaufschlagt. Durch diese Führung der Ventilfeder 46 wird deren Knicken verhindert.

Figur 4 zeigt den Verlauf einer rein elastischen Verformung der Magnethülse.

In der Darstellung gemäß Figur 4 ist der Ventilhub h_{V} über das Drehmoment, mit dem die Magnet-Spannmutter 48 beaufschlagt wird, aufgetragen. Wie Figur 4 zeigt, ergibt sich ein linearer Zusammenhang gekennzeichnet durch 92. Die sich zwischen einem Drehmoment Mₘᵢₙ und einem Mₘₐₓ erstreckende Gerade stellt die Hooke'sche Gerade dar. Diese schneidet einen Zielhub 90, der beim Verschrauben des Schraubverbundes aus Injektorkörper 12, Magnethülse 44, Magnetkern und Anker einzustellen ist und während des Schraubvorgangs auf Erreichen ständig überprüft wird. Beim Fügen der Magnethülse 44, des Magnetkerns 38 samt Magnetspule 42, wird die Magnetspannmutter 48 mit konstanter Rotationsgeschwindigkeit angeschraubt, während gleichzeitig der Hub- beziehungsweise die Schließdauer des Magnetventils gemessen wird. Die Schließdauer bezeichnet die Zeit, die vom Abschalten des Spulenstroms bis zum Einschlagen des Ventilelementes in den Dichtsitz vergeht. Die Messung der Schließdauer ersetzt zum Teil die Messung des Ventilhubs h_{V}, da der Ventilhub bei bestimmten Typen von Kraftstoffinjektoren 10 nicht mehr in montiertem Zustand messbar ist. Die Veränderung des Ventilhubs h_{V} beziehungsweise der Schließdauer des Magnetventils über die Zeit soll bei konstanter Rotationsgeschwindigkeit der Magnetspannmutter 48 nahezu konstant sein, damit die Einrichtung zum Verschrauben der Magnetspannmutter 48 rechtzeitig das Erreichen des Zielhubs 90 erkennt und der Schraubvorgang beendet werden kann. Dies kann dann gewährleistet werden, wenn es sich bei der Verformung der Magnethülse 44 um eine rein elastische Verformung entsprechend des Verlaufs 92 gemäß Figur 4 handelt.

Die in Figur 4 dargestellten Werte Mₘᵢₙ beziehungsweise Mₘₐₓ für das Anzugsdrehmoment der Magnetspannmutter bilden die Randbedingungen beim Verschrauben. Der Minimalwert des Anzugsdrehmoments Mₘᵢₙ ist dadurch definiert, dass ein selbstständiges Lösen der Ventilspannmutter 48 in Betrieb bei zu geringen Losbrechmomenten verhindert werden muss. Der Maximalwert Mₘₐₓ für das Anzugsdrehmoment der Magnetspannmutter ist dadurch definiert, dass die Bauteile bis zu einem bestimmten Drehmoment ihre Festigkeit gegen Versagen sicherstellen. Aufgrund dieser Einschränkung existiert nur ein bestimmter Bereich, innerhalb dessen der Ventilhub h_{V} feineigestellt werden kann.

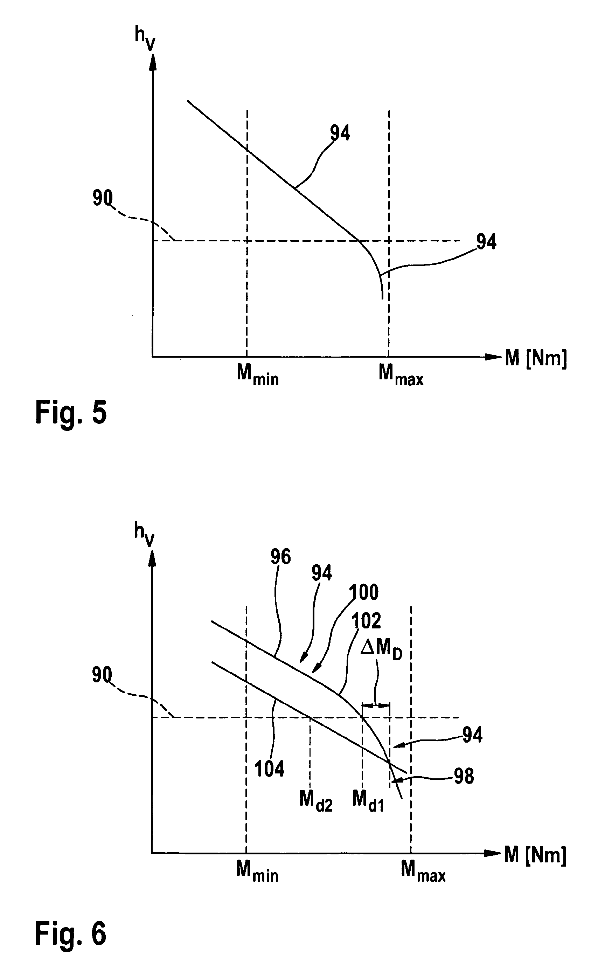

Aus der Darstellung gemäß der Figur 5 geht hervor, dass der Bereich zwischen Mₘᵢₙ und Mₘₐₓ in Bezug auf das Anzugsdrehmoment der Magnetspannmutter 48 eine Einschränkung dadurch erfahren kann, wenn eine plastische Verformung 98 entsprechend des Kurvenzuges 94 gemäß Figur 5 vorliegt. Eine plastische Verformung 98 der Magnetspannmutter 48 kann durchaus bei geringeren Drehmomenten unterhalb des maximalen Drehmomentes Mₘₐₓ auftreten, so dass eine konstante Veränderung des Ventilhubs h_{V} über die Zeit nicht gegeben ist.

Figur 6 zeigt die sich einstellenden plastischen beziehungsweise elastischen Verformungen bezogen auf die die Magnetbaugruppe aufnehmende Magnethülse des Kraftstoffinjektors gemäß Figur 2.

Dem Diagramm gemäß Figur 6 ist zu entnehmen, dass dort der Ventilhub h_{V} über dem Anzugsdrehmoment der Magnetspannmutter 48 aufgetragen ist.

Mit dem erfindungsgemäß vorgeschlagenen Verschraubungsverfahren lässt sich der Verstellbereich nicht nur im Bereich der rein elastischen Verformung 92 nutzen, sondern dieser kann durch das Aufbringen einer gezielten elastisch-plastischen Verformung 94 während des Verschraubens hin zu kleineren Ventilhüben h_{V} verschoben werden oder leicht vergrößert werden. Bei unveränderter Auslegung der Magnethülse 44 lässt sich somit ein größerer Verstellweg nutzen und die Gutteileausbringung bezüglich des Zielwertes in Bezug auf den Ventilhub h_{V} erheblich steigern. Erfindungsgemäß vorgeschlagenen Verschraubungsverfahren folgend, folgt die Verschraubung von der Magnetbaugruppe, aufgenommen in der Magnethülse 44 durch den Magnetspannmutter 48 am Injektorkörper 12 nicht, wie allgemein üblich, mit einem Setzlauf. Dies bedeutet, dass ein Verschrauben der Magnetspannmutter 44 mit maximal auftretenden Drehmomenten ohne gleichzeitige Ventilhubmessung unterbleibt. Der Setzlauf war bisher erforderlich, um eventuelle plastische Verformungen an den Auflageflächen vorwegzunehmen. Eine Auflagefläche, die einer plastischen Verformung unterliegen könnte, ist zum Beispiel die Auflagefläche 86 des Injektorkörpers 12, auf der die Einstellscheibe 80 aufgebracht ist.

Beim erfindungsgemäß vorgeschlagenen Verfahren wird zunächst ein erster Verschraubungslauf 102 vorgenommen, der mit konstanter, relativ geringer Rotationsgeschwindigkeit des Verschraubungswerkzeuges erfolgt, wobei gleichzeitig eine sich stetig wiederholende Messung des Ventilhubes h_{V} beziehungsweise der Schließdauer erfolgt. Bei diesem ersten Verschraubungslauf 102 erfolgt eine elastisch-plastische Verformung 94, die sowohl einen elastischen Bereich 96, nämlich die Hooke'sche Gerade, aufweist als auch einen Bereich 98 umfasst, in dem eine plastische Verformung der Magnethülse 44 vorliegt. Ein Beginn, bei dem der elastische Bereich 96 in den plastischen Bereich 98 übergeht, ist in der Darstellung gemäß Figur 6 durch Bezugszeichen 100 gekennzeichnet. Mit hoher Wahrscheinlichkeit wird es bei hohen Drehmomenten größer gleich Mₘᵢₙ in Bezug auf das Anzugsdrehmoment der Magnetspannmutter zu einer plastischen Verformung 98 der Magnethülse 44, insbesondere innerhalb eines elastischen Kragens, oberhalb eines O-Ring-Einstiches und der Auflagefläche 86 der Magnethülse 44 sehr weit radial außen. Dieser elastische Kragen verbiegt sich hauptsächlich im dünnwandigen Querschnitt und verkürzt damit den Bereich der Magnethülse 44 unterhalb der Auflage 76 des Magnetkerns 38 der Magnetbaugruppe.

Bei Erreichen des Zielhubs 90 während des ersten Verschraubungslaufes liegt ein wohldefiniertes Anzugsdrehmoment M_{d1} vor. Nach Erreichnung des Zielhubs 90 wird dieses erste definierte Anzugsdrehmoment der Magnetspannmutter 48 um ein Differenzdrehmoment ΔM_{D} gesteigert. Dieses entspricht umgerechnet einer Axialkraft bei angenommener maximaler Reibung und der zusätzlichen Kraft, die im Betrieb des Kraftstoffinjektors 10 aufgrund der steigenden Temperaturen auftritt. Im vorliegenden Zusammenhang ist es nicht relevant, ob vor oder nach Erreichen des Zielhubes 90 der plastische Bereich 98 erreicht wird oder nicht. Die Magnethülse 44 plastifiziert bei nochmaligen Erreichen dieser hohen Axialkräfte nicht noch einmal, da es sich bei der vorliegenden plastischen Verformung 98 nicht um ein Kriechen, d.h. eine Verformung unter konstanter Last, handelt.

Anschließend erfolgt ein Lösen der Magnetspannmutter 48 in Losdrehrichtung bis das Anzugsdrehmoment einen definierten unteren Wert erreicht, der kleiner als das Anzugsdrehmoment Mₘᵢₙ liegt.

In einem folgenden weiteren Verschraubungslauf 104 folgt ein erneutes Anziehen der Magnetspannmutter 48 mit konstanter Rotationsgeschwindigkeit des Anzugswerkzeugs bei gleichzeitigem Messen des Ventilhubs h_{V}, bis der Zielhub, d.h. der Zielhub 90, erreicht ist. Dieser wird jedoch bei dem zweiten Verschraubungslauf 104 bereits bei einem zweiten Anzugsdrehmoment M_{d2} erreicht. Für den Fall, das die Magnethülse 44 beim ersten Verschraubungslauf 102 in den Bereich der plastischen Verformung 98 gelangt ist, wird im Regelfall das zweite Anzugsdrehmoment M_{d2} kleiner als das erste Anzugsdrehmoment M_{d1} der Magnetspannmutter 48 sein. Falls die Magnethülse 44 im Bereich des elastischen Kragens 84 nicht plastifiziert, liegen beide Kurven übereinander. Da beim zweiten Verschraubungslauf 104 eine kleinere Axialkraft auftritt, als beim ersten Verschraubungslauf 102, verursacht durch das Differenzdrehmoment ΔM_{D} beim ersten Verschraubungslauf 102, kommt es zu keiner weiteren plastischen Verformung 98 und die Kurve des Ventilhubs h_{V} aufgetragen über das Anzugsdrehmoment hat eine konstante Steigung.

Bei stabilen Verschraubungsprozessen im Rahmen einer Serienfertigung, wird bei dem erfindungsgemäß vorgeschlagenen Verfahren im Vergleich zu bisherigen Prozessen, eine größere Einstellscheibe 80, d.h. eine dickere Einstellscheibe 80 gewählt, so dass sichergestellt ist, dass der Ventilhub h_{V} bei minimalem Drehmoment Mₘᵢₙ, vergleiche Darstellung gemäß Figur 6, nicht zu klein ist. Im Bereich höherer Drehmomente, in denen das Anzugsdrehmoment der Magnetspannmutter 48 oberhalb des Minimalwertes Mₘᵢₙ liegt, wird durch gezielte Plastifizierung der Magnethülse 44 und einer damit einhergehenden Verkürzung der Länge zwischen der Auflage 76 des Magnetkernes 38 und der Einstellscheibe 80 das Demontieren und das Einlegen einer dünneren Einstellscheibe 80 vermieden. Somit kann ein erheblich größerer Verstellbereich genutzt werden, insbesondere dadurch, dass die negative Steigung des Ventilhubes h_{V} aufgetragen über das Anzugsdrehmoment im plastischen Bereich 98 betragsmäßig größer wird und damit bei kleinen Änderungen des Anzugsdrehmomentes der Magnetspannmutter 48 große Änderungen im Ventilhub h_{V} erreicht werden können.

Das eingangs erwähnte Unterlassen des Setzlaufes bewirkt, dass die gezielt während des Schraubvorganges erfolgte Plastifizierung und Verkürzung der Magnethülse 44 nicht bereits vor dem eigentlichen Verschrauben auf das Vorliegen des Zielhubes 90 stattfindet. In bestimmten Fällen kann auf das Auswählen einer bestimmten Einstellscheibe 80 verzichtet werden und stattdessen eine Einstellscheibe 80 in einer Standarddicke verbaut werden. Der Verstellbereich wird dann so genutzt, dass bei jedem Kraftstoffinjektor der gewünschte Ventilhub h_{V}, d.h. der Zielhub 90, entsprechend eingestellt werden kann.

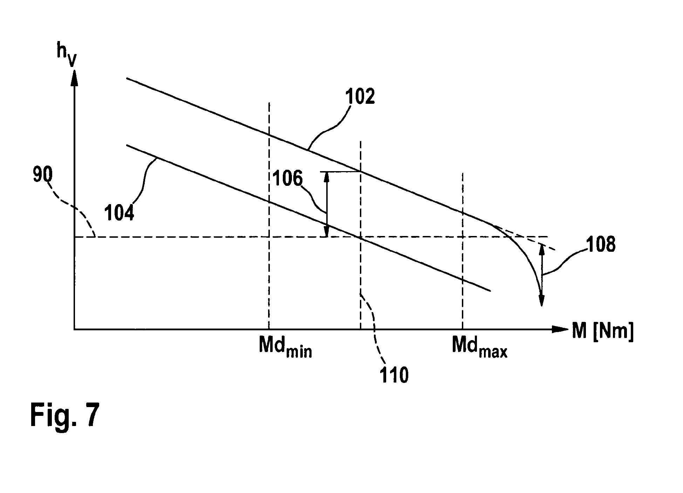

Der Darstellung gemäß Figur 7 ist das Erreichen einer Zielschließdauer zu entnehmen, die sich bei Identität einer berechneten plastischen Verformung und einer tatsächlich gemessenen plastischen Verformung einstellt.

Figur 7 zeigt die Schließdauer S_{D}, die dem Ventilhub h_{V} entspricht, aufgetragen über das Anzugsdrehmoment, welches auf die Magnetspannmutter wirkt.

Die Magnetbaugruppe wird ohne dass ein Vorsetzlauf durchgeführt wird, mit einer tendenziell zu groß ausgewählten, d.h. zu dick ausgewählten Einstellscheibe 80 auf den Kraftstoffinjektor 10 aufgeschraubt. Während des ersten Verschraubungslaufes 102 wird bei mittlerem Drehmoment, d.h. bei Erreichen einer Mitte 110 des Drehmomentfensters zwischen Mdₘᵢₙ und Mdₘₐₓ die Schließdauer gemessen und ein eventuell auftretender Unterschied zur Zielschließdauer 90 berechnet. Dieser Unterschied ist durch eine gezielte Plastifizierung der Hülse darzustellen. Diese berechnete nötige plastische Verformung zum Erreichen der Zielschließdauer 90 ist in der Darstellung gemäß Figur 7 durch Bezugszeichen 106 angedeutet. Nach Ende des ersten Verschraubungslaufes 102 wird eine sich tatsächlich eingestellt habende plastische Verformung 108 der Magnetspannhülse 44, insbesondere im Bereich des umlaufenden Absatzes 84 gemessen, der den elastischen/plastisch verformbaren Kragen darstellt. Die tatsächliche Plastifizierung 108 wird durch Abweichung der Schließdauerkurve über den Drehmomentverlauf von der Gerade, welche die rein plastische Verformung darstellt, während des ersten Verschraubungslaufes 102 bei sehr hohen Anzugsdrehmomenten gemessen bzw. durch den Schrauberstand berechnet. Die derart verformte Magnethülse 44 ermöglicht das Erreichen der Zielschließdauer 90 genau in der Mitte 110 des Drehmomentfensters zwischen dem minimalem Drehmoment der Ventilspannmutter Mₘᵢₙ und dem maximalen Drehmoment der Ventilspannmutter Mₘₐₓ erreichen.

Während des zweiten Verschraubungslaufes 104, vgl. Darstellung gemäß Figur 7, wird die Magnetspannmutter 48 bis zum Erreichen der Zielschließdauer 90 angezogen. Danach ist die Schließdauereinstellung abgeschlossen.

## Patentansprüche

1. Verfahren zur Einstellung des Ventilhubes h_{V} oder einer Schließdauer S_{D} eines Magnetventils zur Betätigung eines Kraftstoffinjektors (10) mit nachfolgenden Verfahrensschritten:
a) Verschrauben einer Magnethülse (44) mittels einer Magnetspannmutter (48) an einem Injektorkörper (12) in einem ersten Verschraubungslauf (102) bis zum Erreichen eines Zielhubes (90) bei einem ersten Drehmoment M_{d1}, wobei eine elastisch-plastische Verformung (94) mit einer teilweisen Plastifizierung der Magnethülse (44) durchlaufen wird,
b) bei Erreichen des Zielhubes (90) bei dem ersten Drehmoment M_{d1} erfolgt eine Weiterverdrehung der Magnetspannmutter (48) mit einem Differenz-Drehmoment ΔM_{D},
c) ein Lösen der Magnetspannmutter (48), bis ein Drehmoment Mₘᵢₙ unterschritten ist,
d) dem erneuten Verschrauben der Magnetspannmutter (48) in einem zweiten Verschraubungslauf (104) bis zum Erreichen des Zielhubes (90) bei einem zweiten Drehmoment M_{d2}.

2. Verfahren gemäß Anspruch 1, **dadurch gekennzeichnet, dass** das Differenz-Drehmoment ΔM_{D} gemäß Verfahrensschritt b) umgerechnet einer Axialkraft entspricht, die aus angenommener maximaler Reibung und der zusätzlichen Kraft, die im Betrieb des Kraftstoffinjektors 10 aufgrund steigender Temperatur auftritt, entspricht.

3. Verfahren gemäß Anspruch 1, **dadurch gekennzeichnet, dass** die teilweise Plastifizierung der Magnethülse (44) im Bereich eines umlaufenden Absatzes (84) erfolgt, welcher als ein elastischer Kragen ausgebildet ist.

4. Verfahren gemäß Anspruch 1, **dadurch gekennzeichnet, dass** während der Durchführung von Verfahrensschritt d) eine Axialkraft erreicht wird, die kleiner ist, als die Axialkraft, die gemäß Verfahrensschritt b) beim Gesamtdrehmoment aus erstem
Anzugsdrehmoment M_{d1} und dem Differenzdrehmoment ΔM_{D} erzeugt wird und eine plastische Verformung (98) der Magnethülse (44) im Betrieb des Kraftstoffinjektors (10) unterbleibt.

5. Verfahren gemäß Anspruch 1, **dadurch gekennzeichnet, dass** zwischen dem Injektorkörper (12), (86) und der Magnethülse (46) eine Einstellscheibe (80) eingelegt wird, die sicherstellt, dass bei Anzugsdrehmomenten Mₘᵢₙ der Magnetspannmutter (48) ein Ventilhub h_{V} entsteht, der größer ist als ein Zielhub (90).

6. Verfahren gemäß Anspruch 1, **dadurch gekennzeichnet, dass** im Schraubverbund aus Injektorkörper (12) und Magnetspannmutter (48) in den Verfahrensschritten a) bis b) bei Anzugsdrehmomenten M > Mₘᵢₙ durch plastische Verformung (94) der Magnethülse (44) eine Verkürzung der Länge zwischen einer Auflage (76) des Magnetkernes (38) und der Einstellscheibe (80) erreicht wird.

7. Verfahren gemäß Anspruch 1, **dadurch gekennzeichnet, dass** eine negative Steigung zwischen Ventilhub h_{V} und der Anzugsdrehmoment M der Magnetspannmutter (48) im plastischen Bereich (98) betragsmäßig größer wird und bei kleinern Änderungen des Anzugsdrehmoments M größere Änderungen im Ventil Hᵥ erreicht werden.

8. Verfahren gemäß Anspruch 1, **dadurch gekennzeichnet, dass** die während des Verfahrensschrittes a) und b) erreichte Plastifizierung und Verkürzung der Magnethülse erfolgt, während der Ventilhub gemessen wird.

9. Verfahren gemäß Anspruch 1, **dadurch gekennzeichnet, dass** bei einem ersten Verschraubungslauf (102) eine bei einem mittleren Anzugsdrehmoment M_{d} berechnete, notwendige plastische Verformung (106) der Magnethülse (44) zur Erreichung einer Zielschließdauer (90) nahezu identisch mit einer tatsächtich gemessenen plastischen Verformung (108) der Magnethülse (44) im plastischen Bereich (98) ist und eine derart plastisch verformte Magnethülse (44) das Erreichen der Zielschließdauer (90) in der Mitte des Drehmomentfensters(110) ermöglicht.

10. Verwendung des Verfahrens gemäß einem oder mehrerer der vorhergehenden Ansprüche zur Montage eines Magnetventiles an einem Kraftstoffinjektor (10).

## Claims

1. Method for adjusting the valve lift h_{V} or a closing time S_{D} of a solenoid valve for operating a fuel injector (10), comprising the following steps:
a) a magnet sleeve (44) being screwed to an injector body (12) by means of a magnet clamping nut (48) in a first screwing operation (102) until a target lift (90) is reached at a first torque M_{d1}, with elastic-plastic deformation (94) with partial plasticization of the magnet sleeve (44) taking place,
b) the magnet clamping nut (48) being turned further at a difference torque ΔM_{D} when the target lift (90) is reached at the first torque M_{d1},
c) the magnet clamping nut (48) being loosened until a torque M_{Min} is undershot,
d) the magnet clamping nut (48) being screwed again in a second screwing operation (104) until the target lift (90) is reached at a second torque M_{d2}.

2. Method according to Claim 1, **characterized in that** the difference torque ΔM_{D} according to method step b) corresponds, in converted form, to an axial force given the assumed maximum friction and the additional force which occurs during operation of the fuel injector (10) on account of an increasing temperature.

3. Method according to Claim 1, **characterized in that** the partial plasticization of the magnet sleeve (44) takes place in the region of a circumferential projection (84) which is in the form of an elastic collar.

4. Method according to Claim 1, **characterized in that** an axial force which is lower than the axial force which is generated at the total torque comprising the first tightening torque M_{d1} and the difference torque ΔM_{D} according to method step b) is reached during the implementation of method step d), and plastic deformation (98) of the magnet sleeve (44) is suppressed during operation of the fuel injector (10).

5. Method according to Claim 1, **characterized in that** an adjusting disc (80) is inserted between the injector body (12), (86) and the magnet sleeve (46), the said adjusting disc ensuring that a valve lift h_{V} which is greater than a target lift (90) is produced at tightening torques M_{Min} of the magnet clamping nut (48).

6. Method according to Claim 1, **characterized in that** the length between a support (76) of the magnet core (38) and the adjusting disc (80) is shortened by plastic deformation (94) of the magnet sleeve (44) in the composite screw structure comprising the injector body (12) and the magnet clamping nut (48) in method steps a) to b) at tightening torques where M > M_{Min}.

7. Method according to Claim 1, **characterized in that** a negative gradient between the valve lift h_{V} and the tightening torque M of the magnet clamping nut (48) in the plastic region (98) becomes greater in magnitude and relatively large changes in the valve Hᵥ are achieved with relatively small changes in the tightening torque M.

8. Method according to Claim 1, **characterized in that** the plasticization and shortening of the magnet sleeve which are achieved during method steps a) and b) take place while the valve lift is being measured.

9. Method according to Claim 1, **characterized in that**, in a first screwing operation (102), a requisite plastic deformation (106), which is calculated at an average tightening torque M_{d}, of the magnet sleeve (44) for reaching a target closing time (90) is virtually identical to an actually measured plastic deformation (108) of the magnet sleeve (44) in the plastic region (98), and a magnet sleeve (44) which is plastically deformed in this way makes it possible to reach the target closing time (90) in the middle of the torque window (110).

10. Use of the method according to one or more of the preceding claims for mounting a solenoid on a fuel injector (10).

## Revendications

1. Procédé de réglage de la course de soupape hᵥ ou d'une durée de fermeture S_{D} d'une électrovanne pour l'actionnement d'un injecteur de carburant (10), comprenant les étapes de procédé suivantes :
a) vissage d'un manchon magnétique (44) au moyen d'un écrou de serrage magnétique (48) sur un corps d'injecteur (12) dans une première opération de vissage (102) jusqu'à obtenir une course cible (90) à un premier couple M_{d1}, en passant par une déformation élastique-plastique (94) avec une plastification partielle du manchon magnétique (44),
b) à l'obtention de la course cible (90) au premier couple M_{d1}, serrage supplémentaire de l'écrou de serrage magnétique (48) avec un couple différentiel ΔM_{D},
c) desserrage de l'écrou de serrage magnétique (48) jusqu'en dessous d'un couple M_{Min},
d) resserrage de l'écrou de serrage magnétique (48) dans une deuxième opération de vissage (104) jusqu'à obtenir la course cible (90) à un deuxième couple M_{d2}.

2. Procédé selon la revendication 1, **caractérisé en ce que** le couple différentiel ΔM_{D} selon l'étape de procédé b) correspond, après conversion, à une force axiale dans le cas d'un frottement maximal admis et de la force supplémentaire qui se produit pendant le fonctionnement de l'injecteur de carburant (10) en raison de la température croissante.

3. Procédé selon la revendication 1, **caractérisé en ce que** la plastification partielle du manchon magnétique (44) a lieu dans la région d'un épaulement périphérique (84), qui est réalisé sous forme de rebord élastique.

4. Procédé selon la revendication 1, **caractérisé en ce que** pendant la mise en oeuvre de l'étape de procédé d), une force axiale est atteinte, laquelle est inférieure à la force axiale qui est produite selon l'étape de procédé b) pour un couple total constitué du premier couple de serrage M_{d1} et du couple différentiel ΔM_{D}, et une déformation plastique (98) du manchon magnétique (44) pendant le fonctionnement de l'injecteur de carburant (10) n'a pas lieu.

5. Procédé selon la revendication 1, **caractérisé en ce qu'**entre le corps d'injecteur (12), (86) et le manchon magnétique (44) est introduite une rondelle de réglage (80), qui fait en sorte que pour des couples de serrage Mₘᵢₙ de l'écrou de serrage magnétique (48), il se produit une course de soupape hᵥ qui est supérieure à une course cible (90).

6. Procédé selon la revendication 1, **caractérisé en ce que** dans l'assemblage vissé constitué du corps d'injecteur (12) et de l'écrou de serrage magnétique (48) dans les étapes de procédé a) et b), pour des couples de serrage M > M_{Min,} on obtient par déformation plastique (94) du manchon magnétique (44) un raccourcissement de la longueur entre un appui (76) du noyau magnétique (38) et la rondelle de réglage (80).

7. Procédé selon la revendication 1, **caractérisé en ce qu'**un pas négatif entre la course de soupape hᵥ et le couple de serrage M de l'écrou de serrage magnétique (48) dans la plage plastique (98) augmente en valeur absolue, et dans le cas de petites variations du couple de serrage M, de plus grandes variations sont obtenues dans la soupape Hᵥ.

8. Procédé selon la revendication 1, **caractérisé en ce que** la plastification et le raccourcissement du manchon magnétique obtenus pendant les étapes de procédé a) et b) ont lieu tandis que la course de la soupape est mesurée.

9. Procédé selon la revendication 1, **caractérisé en ce que** dans une première opération de vissage (102), une déformation plastique (106) du manchon magnétique (44), calculée pour un couple de serrage moyen M_{d}, nécessaire pour obtenir une durée de fermeture cible (90), est pratiquement identique à une déformation plastique effectivement mesurée (108) du manchon magnétique (44) dans la plage plastique (98), et un manchon magnétique (44) déformé plastiquement de la sorte permet d'obtenir la durée de fermeture cible (90) au centre de la fenêtre de couple (110).

10. Utilisation du procédé selon l'une quelconque ou plusieurs des revendications précédentes pour le montage d'une électrovanne sur un injecteur de carburant (10).
